# EUROPÄISCHE PATENTSCHRIFT

(11) **EP 2 620 371 B1**
(45) Veröffentlichungstag und Bekanntmachung des Hinweises auf die Patenterteilung: **03.12.2014**
(21) Anmeldenummer: 13450004.0
(22) Anmeldetag: 24.01.2013
(51) Int. Cl.: B64G 1/22, B64G 1/40

(54) **Stellmechanismus**
Positioning mechanism
Mécanisme de réglage

(30) Priorität: 25.01.2012 AT 922012
(43) Veröffentlichungstag der Anmeldung: 31.07.2013
(73) Patentinhaber: RUAG Space GmbH, 1120 Wien (AT)
(72) Erfinder: Neugebauer, Christian, 1230 Wien (AT); Janu, Paul, 7100 Neusiedl am See (AT)
(74) Vertreter: Keschmann, Marc

(56) Entgegenhaltungen:
- AT-U1- 3 647
- DE-C1- 3 713 506
- US-A- 4 465 253

## Beschreibung

Die Erfindung betrifft einen Stellmechanismus für Weltraumanwendungen mit wenigstens einer flexiblen Medienleitung zur Versorgung wenigstens einer verstellbaren Komponente, insbesondere eines Triebwerks, umfassend einen um wenigstens eine Schwenkachse zwischen zwei Schwenkwinkel-Extrempositionen schwenkbar gelagerten Arm.

Triebwerke von Raumflugkörpern, wie z.B. Satelliten, benötigen zum Betrieb eine Treibstoffversorgung. Der Treibstoff wird den Triebwerken über wenigstens eine Medienleitung zugeführt. Insbesondere im Falle von korrosiven Treibstoffen oder von gasförmigen Treibstoffen, wie z.B. Xenon für elektrostatische Triebwerke, werden die Medienleitungen aus Stahl oder Titanlegierungen gefertigt. Solche Medienleitungen können nur begrenzten Spannungen und Biegemomenten unterworfen werden, sodass unzulässige Biegeradien vermieden werden müssen.

Triebwerksstellmechanismen dienen dazu, den Schubvektor eines Triebwerks einzustellen. Beispielsweise ist es in vielen Fällen erforderlich, dass der Schubvektor des Antriebes durch den Schwerpunkt des Raumflugkörpers verläuft, damit der Raumflugkörper keinen Drehimpuls erfährt, welcher zu einer Eigenrotation führen könnte. Dabei ist darauf Rücksicht zu nehmen, dass der Schwerpunkt des Raumflugkörpers mit zunehmendem Treibstoffverbrauch Veränderungen unterworfen ist.

Stellmechanismen umfassen in der Regel wenigstens einen um wenigstens eine Schwenkachse zwischen zwei Schwenkwinkel-Extrempositionen schwenkbar gelagerten Arm. Die Verschwenkung des Arms wird von einem Stellmotor bewerkstelligt.

Die Verschwenkung des Arms bewirkt hierbei eine Verstellung der Position oder Ausrichtung einer Komponente, insbesondere eines Triebwerkes. Auf Grund der Verschwenkung des Arms wird die zur Komponente bzw. dem Triebwerk führende Medienleitung auf Biegung beansprucht. Aus dem Stand der Technik sind verschiedene Maßnahmen bekannt, um die Biegebelastungen zu begrenzen, siehe US 4 465 253 und AT 003 647 U. Beispielsweise ist es bekannt, die Medienleitung wendelförmig auszubilden, wobei die Wendel so angeordnet ist, dass es bei einer Verschwenkung des Arms zu einer Verbiegung quer zur Wendelachse kommt. Der Vorteil dieser Ausbildung liegt in der geringen Masse und darin, dass eine Verbiegung der Wendel um zwei orthogonale Achsen möglich ist. Nachteilig sind die komplizierte Fertigung der freien Wendel, die hohe Deformation der Bauteile unter Sinuslast im Eigenfrequenz-Bereich der Wendel, der hohe Berechnungsaufwand für die korrekte Auslegung, der limitierte Biegewinkel (je größer der Biegewinkel, desto weicher muss die Wendel sein und desto niedriger ist die Eigenfrequenz) und das hohe Rückstellmoment (dies erfordert eine hohe Motorisierung und damit schwere Motoren). Weiters ist diese Anordnung der Wendel ausschließlich nahe dem Achsenschnittpunkt der Stellmotoren möglich.

Die Erfindung zielt daher darauf ab, die Führung der flexiblen Medienleitung bei einem Stellmechanismus der eingangs genannten Art dahingehend weiterzubilden, dass auch bei großen Verstellwinkeln von bis zu ± 40° unzulässig hohe Spannungen und unzulässige Biegemomente auf die Medienleitung vermieden werden und damit die Betriebssicherheit wesentlich erhöht wird. Weiters zielt die Erfindung darauf ab, die folgenden Vorgaben zumindest teilweise zu erfüllen:
- Aufnahme hoher mechanischer Vibrationslasten
- Ermöglichung großer Verbiegewinkel
- Geringes resistives Moment und geringes Rückstellmoment
- die Startposition (Schwenkposition des schwenkbaren Arms beim Start des Raumfahrzeugs von der Erde) soll nicht auf eine Stellwinkel-Extremposition beschränkt sein
- Einfacher Aufbau
- Geringe Masse
- Einfache Berechnung
- Verwendung von für die Raumfahrt zugelassenen Materialien
- Geringe Fertigungskosten

Zur Lösung dieser Aufgabe sieht die Erfindung vor, dass die flexible Medienleitung schraubenförmig um eine zur Schwenkachse parallele Wendelachse gewendelt ist, wobei die schraubenförmige Medienleitung in einer zwischen den zwei Schwenkwinkel-Extrempositionen liegenden Startposition in radialem Abstand von einer innerhalb oder außerhalb der Wendel angeordneten zylindrischen Anschlagfläche eines Anschlagelements angeordnet ist. Dadurch, dass die flexible Medienleitung schraubenförmig um eine zur Schwenkachse parallele Wendelachse gewendelt ist, wird die Biegebelastung der Medienleitung verringert und gleichzeitig werden größere Schwenkwinkel zugelassen. Bei einer Verschwenkung des schwenkbaren Arms ändert sich der Durchmesser der Wendel leicht und die durch diese Durchmesseränderung hervorgerufene Biegebelastung ist minimal. Je höher die Anzahl der Windungen der schraubenförmigen Medienleitung ist, desto geringer ist die mechanische Belastung der Medienleitung bei einer Verschwenkung des Schwenkarms. Bevorzugt umfasst die schraubenförmige Medienleitung wenigstens zwei, insbesondere wenigstens drei Windungen.

Die erfindungsgemäße Anordnung der Wendel resultiert in einer hohen Eigenfrequenz, wodurch hohe mechanische Lasten möglich sind. Ein weiterer Vorteil ist, dass die Durchmesseränderung der Wendel reibungsfrei verläuft, wodurch der Schwenkvorgang lediglich durch ein ggf. vorhandenes Rückstellmoment beeinflusst wird. Das Rückstellmoment kann aber durch eine weiche Auslegung der Medienleitung bzw. der Wendel ohne weiteres minimiert werden.

Dadurch, dass die schraubenförmige Medienleitung in einer zwischen den zwei Schwenkwinkel-Extrempositionen liegenden Startposition in radialem Abstand von wenigstens einem Anschlagelement angeordnet ist, kann sich die Medienleitung in der Startposition radial frei bewegen. Diese radiale Bewegungsfreiheit ermöglicht im Betrieb eine Verschwenkung des Schwenkarms ausgehend von der Startposition in beide Richtungen. Der Durchmesser der schraubenförmigen Wendel kann während der Operation hierbei ungehindert zu- oder abnehmen, ohne das wenigstens eine Anschlagelement zu berühren. Erst bei größeren Verformungen, beispielsweise bedingt durch Startvibration, berührt die Medienleitung das wenigstens eine Anschlagelement. Das Anschlagelement hat dabei die Funktion, die Amplitude von Schwingungsbewegungen der Medienleitung und damit deren mechanische Belastung während der Startphase zu begrenzen.

Unter der Startposition des Schwenkarms bzw. der Medienleitung wird hierbei diejenige Position verstanden, die beim Start des Raumflugkörpers von der Erde eingestellt ist. Beim Start treten hohe Kräfte und Vibrationen auf, sodass alle bewegbaren Teile des Stellmechanismus während des Starts in ihrer jeweiligen Startposition fixiert werden müssen. Für den Betrieb des Stellmechanismus im Weltall wird die Fixierung der Startposition durch geeignete fernsteuerbare Freigabeelemente aufgehoben. Dadurch, dass die Startposition sich erfindungsgemäß zwischen den Schwenkwinkel-Extrempositionen befindet, entspricht die Startposition einer Nutzposition, sodass bei Versagen des Mechanismus trotzdem ein sinnvoller Triebwerksbetrieb - wenngleich auch ohne Richtungsvektorsteuerung - möglich ist.

Dadurch, dass das innerhalb oder außerhalb der Wendel angeordnete Anschlagelement eine zylindrische Anschlagfläche aufweist, tritt bei einer Berührung der Medienleitung und der Anschlagfläche ein Hertzscher Kontakt auf, nämlich ein Kontakt zwischen einem Toroid und einem Zylinder, wodurch die lokalen Spannungen im Kontaktpunkt bei einem Anprall minimiert werden. Die zylindrische Anschlagfläche kann entweder innerhalb oder außerhalb der Wendel angeordnet sein, wobei auch eine Anordnung von zwei Anschlagflächen mit jeweils einer zylindrischen Anschlagfläche - eine außerhalb und eine innerhalb der Wendel - denkbar ist.

Eine bevorzugte Weiterbildung der Erfindung sieht vor, dass die Wendelachse mit der Schwenkachse zusammenfällt, wodurch die Biegebelastung der wendelförmigen Medienleitung besonders gut minimiert wird.

Bevorzugt besteht die Medienleitung aus Stahl oder einer Titanlegierung. Bevorzugt ist die Medienleitung hierbei als Rundrohr ausgebildet.

Die lokalen Spannungen im Kontaktpunkt zwischen der Medienleitung und dem Anschlagelement können dadurch noch weiter minimiert werden, dass das Anschlagelement aus Kunststoff, insbesondere einem Hochleistungskunststoff, wie z.B. einem Polyimid oder Polyetheretherketon (PEEK), besteht. Derartige Materialien sind einerseits relativ weich und bieten andererseits weltraumkompatible Eigenschaften. Als Polyimid kommt besonders bevorzugt zum Beispiel das Material Vespel® SP1 oder Vespel® SP3 der Firma DuPont zum Einsatz.

Die Windungen der schraubenförmigen Medienleitung sind bevorzugt axial voneinander beabstandet angeordnet, wobei die axiale Bewegbarkeit der Medienleitung bevorzugt dadurch begrenzt ist, dass zwischen benachbarten Windungen der schraubenförmigen Medienleitung jeweils wenigstens ein Abstandhalter angeordnet ist.

Bedingt durch die geforderte Redundanz für die Erhöhung der Betriebssicherheit ist es in aller Regel erforderlich, wenigstens zwei derartige Medienleitungen, insbesondere Treibstoffleitungen je Antrieb vorzusehen. Eine bevorzugte Weiterbildung sieht in diesem Zusammenhang vor, dass eine Mehrzahl von parallel verlaufenden Medienleitungen jeweils schraubenförmig gewendelt ist, zwischen denen jeweils wenigstens ein axialer Abstandhalter angeordnet ist.

Die genannten Abstandhalter sind hierbei spielbehaftet zwischen den schraubenförmigen Medienleitungen bzw. deren Windungen angeordnet sein, was beispielsweise eine thermische Ausdehnung der Medienleitung sowie deren reibungsarme Bewegung erlaubt.

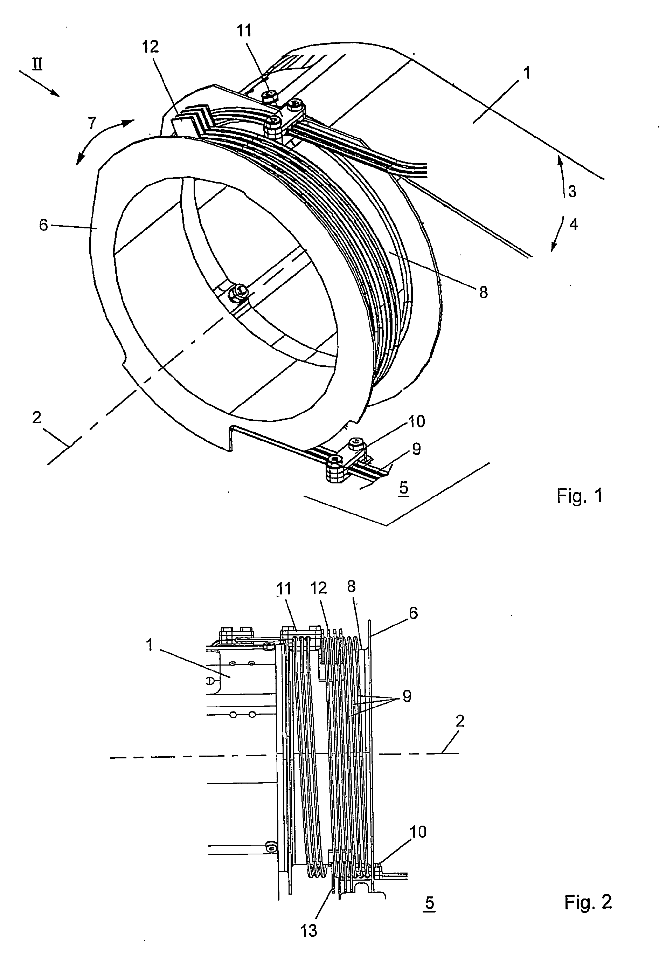

Die Erfindung wird nachfolgend anhand eines in der Zeichnung schematisch dargestellten Ausführungsbeispiels näher erläutert. In dieser zeigen Fig. 1 eine perspektivische Ansicht der Stellvorrichtung und Fig. 2 eine Ansicht gemäß dem Pfeil II der Fig. 1.

In Fig. 1 ist der erfindungsgemäße Stellmechanismus dargestellt, wobei ein schwenkbar gelagerter Arm 1 mittels eines nicht näher dargestellten Lagers um die Schwenkachse 2 ausgehend von der in Fig. 1 dargestellten Startposition in Richtung des Pfeiles 3 nach oben oder in Richtung des Pfeiles 4 nach unten verschwenkt werden kann. Die Verschwenkung des Arms 1 erfolgt relativ zu einer schematisch dargestellten ortsfesten Komponente 5. Mit dem schwenkbar gelagerten Arm 1, ist ein haspelförmiges Anschlagelement 6 drehfest verbunden, dass bei einer Verschwenkung des Arms 1 entsprechend dem Doppelpfeil 7 mit dem Arm 1 um die Achse 2 mitgedreht wird. Das haspelförmige Anschlagelement 6 weist eine zylindrische Anschlagfläche 8 auf, deren Achse mit der Schwenkachse 2 zusammenfällt.

Am Stellmechanismus sind drei parallele Medienleitungen 9 geführt mit denen beispielsweise Treibstoff vom stationären Element 5 zu einem am schwenkbaren Arm 1 angeordneten Triebwerk transportiert werden kann. Die Medienleitungen 9 werden am stationären Element 5 in einer mit dem stationären Element 5 starr verbundenen Klemme 10 gehalten. Die Medienleitungen 9 werden weiters in einer mit dem schwenkbar gelagerten Arm 1 starr verbundenen Klemme 11 gehalten. Bei einer Verschwenkung des Arms 1 kommt es somit zu einer Verschwenkung der Klemme 11 relativ zur Klemme 10, sodass aufgrund der in Längsrichtung unverschieblichen Aufnahme der Medienleitungen 9 in den Klemmen 10 und 11 ein Längenausgleich des zwischen den Klemmen 10 und 11 verlaufenden Abschnitts der Medienleitungen 9 erforderlich ist. Die Medienleitungen 9 sind zu diesem Zweck in dem genannten Abschnitt schraubenlinienförmig um das Anschlagelement 6 gewendelt. Im in Fig. 1 dargestellten Ausführungsbeispiel umfassen die schraubenförmigen Medienleitungen 9 zweieinhalb Windungen, wobei die Medienleitungen 9 in der in Fig. 1 dargestellten Startposition in radialem Abstand von der zylindrischen Anschlagfläche 8 angeordnet sind. Dieser Abstand verringert sich bei einer Verschwenkung des Arms in Richtung des Pfeils 4 und vergrößert sich bei einer Verschwenkung des Arms in Richtung des Pfeils 3.

In Fig. 2 ist deutlich ersichtlich, dass die schraubenförmigen Medienleitungen 9 die zylindrische Anschlagfläche 8 an keiner Stelle berühren. Weiters ist ersichtlich, dass zwischen den benachbarten Medienleitungen 9 axiale Abstandhalter 12 und 13 angeordnet sind, die rechenartig ausgebildet sind.

Zusammenfassend wird durch die Erfindung eine Führung von Medienleitungen bei Stellmechanismen für Weltraumanwendungen ermöglicht, die eine Reihe von Vorteilen mit sich bringt:
- Hohe mechanische Vibrationslasten möglich: Aufgrund des weichen Zylindermaterials und aufgrund des Hertzschen Kontaktes "Toroid auf Zylinder" sind die lokalen Spannungen im Kontaktpunkt minimiert, sodass keine Beschädigung der Leitung beim Anprall auftritt und trotzdem eine große freie Wegstrecke gewählt werden kann.
- Große Verbiegewinkel: Durch Erhöhung der Anzahl der Schraubenwindungen können auch große Verbiegewinkel realisiert werden, ohne dass das Rückstellmoment wesentlich ansteigt, oder die mechanische Belastung des Rohres die Wechselfestigkeit des Materials überschreitet.
- Geringes resistives Moment: Die schraubenförmig gewendelte Medienleitung kann sich frei bewegen, somit tritt keine Reibung auf.
- Geringes Rückstellmoment: Eine sehr weiche Auslegung der Leitung ist möglich, da die Vibrationslasten durch die Anschläge unterstützt werden. Dadurch ist das Rückstellmoment klein.
- Weiters kann durch Erhöhung der Anzahl der Schraubenwindungen das Rückstellmoment soweit reduziert werden, dass eine Betätigung auch mit geringer Motorisierung möglich ist.
- Startposition nicht in einer Stellwinkel-Extremposition: Die Verbiegung kann in beide Richtungen erfolgen. Somit ist eine Startposition in einer Nutzposition möglich, sodass bei Versagen des Mechanismus trotzdem ein sinnvoller Triebwerksbetrieb - wenngleich auch ohne Richtungsvektorsteuerung - möglich ist.
- Einfacher Aufbau: Eine Anbringung am Aktuator ist möglich, sodass ein raumsparendes Konzept möglich ist.
- Geringe Masse: Zur Rohrmasse selbst kommen lediglich die Kunststoffteile.
- Einfache Berechnung: Formeln zur Berechnung von Schraubenfedern genügen zur mechanischen Bemessung der Leitung.
- Verwendung von für die Raumfahrt zugelassenen Materialien.
- Geringe Fertigungskosten.

## Patentansprüche

1. Stellmechanismus für Weltraumanwendungen mit wenigstens einer flexiblen Medienleitung zur Versorgung wenigstens einer verstellbaren Komponente, insbesondere eines Triebwerks, umfassend einen um wenigstens eine Schwenkachse zwischen zwei Schwenkwinkel-Extrempositionen schwenkbar gelagerten Arm, **dadurch gekennzeichnet, dass** die flexible Medienleitung (9) schraubenförmig um eine zur Schwenkachse (2) parallele Wendelachse gewendelt ist, wobei die schraubenförmige Medienleitung (9) in einer zwischen den zwei Schwenkwinkel-Extrempositionen liegenden Startposition in radialem Abstand von einer innerhalb oder außerhalb der Wendel angeordneten zylindrischen Anschlagfläche (8) eines Anschlagelements (6) aus Kunststoff angeordnet ist und zwischen benachbarten Windungen der schraubenförmigen Medienleitung (9) jeweils wenigstens ein Abstandhalter (12) spielbehaftet angeordnet ist.

2. Stellmechanismus nach Anspruch 1, **dadurch gekennzeichnet, dass** die Wendelachse mit der Schwenkachse (2) zusammenfällt.

3. Stellmechanismus nach Anspruch 1 oder 2, **dadurch gekennzeichnet, dass** die Medienleitung (9) aus Stahl oder einer Titanlegierung besteht.

4. Stellmechanismus nach Anspruch 1, 2 oder 3, **dadurch gekennzeichnet, dass** die Medienleitung (9) als Rundrohr ausgebildet ist.

5. Stellmechanismus nach einem der Ansprüche 1 bis 4, **dadurch gekennzeichnet, dass** das Anschlagelement (6) aus einem Hochleistungskunststoff, wie z.B. einem Polyimid oder Polyetheretherketon, besteht.

6. Stellmechanismus nach einem der Ansprüche 1 bis 5, **dadurch gekennzeichnet, dass** die Windungen der schraubenförmigen Medienleitung (9) axial voneinander beabstandet sind.

7. Stellmechanismus nach einem der Ansprüche 1 bis 6, **dadurch gekennzeichnet, dass** eine Mehrzahl von parallel verlaufenden Medienleitungen (9) jeweils schraubenförmig gewendelt ist, zwischen denen jeweils wenigstens ein axialer Abstandhalter (12) angeordnet ist.

## Claims

1. An adjusting mechanism for applications in space, with at least one flexible media line for supplying at least one adjustable component, in particular a propulsion unit, comprising an arm mounted so as to be pivotable about at least one pivot axis between two pivot-angle extreme positions, **characterized in that** the flexible media line (9) is helically coiled about a helix axis extending in parallel with the pivot axis (2), wherein the helical media line (9), in a start position located between the two pivot-angle extreme positions, is arranged at a radial distance from a cylindrical stop surface (8) of a stop element (6) made of plastic, which stop surface is provided within or outside of the helix, and at least one spacer (12) is each arranged with a clearance between adjacent windings of the helical media line (9).

2. An adjusting mechanism according to claim 1, **characterized in that** the helix axis coincides with the pivot axis (2).

3. An adjusting mechanism according to claim 1 or 2, **characterized in that** the media line (9) is made of steel or a titanium alloy.

4. An adjusting mechanism according to claim 1, 2 or 3, **characterized in that** the media line (9) is configured as a circular tube.

5. An adjusting mechanism according to any one of claims 1 to 4, **characterized in that** the stop element (6) is made of a high-performance plastic such as polyimide or polyetheretherketone.

6. An adjusting mechanism according to any one of claims 1 to 5, **characterized in that** the windings of the helical media line (9) are arranged in an axially spaced-apart relationship.

7. An adjusting mechanism according to any one of claims 1 to 6, **characterized in that** a plurality of parallelly extending media lines (9) are each helically coiled, between which at least one axial spacer (12) is each arranged.

## Revendications

1. Mécanisme de réglage pour applications spatiales, équipé d'au moins un conduit de fluide flexible destiné à alimenter au moins un composant réglable, en particulier un propulseur, comprenant un bras monté à pivotement autour d'au moins un axe de pivotement entre deux positions extrêmes d'angle de pivotement, **caractérisé en ce que** le conduit de fluide flexible (9) est enroulé en spirale autour d'un axe d'hélice parallèle à l'axe de pivotement (2), le conduit de fluide (9) en spirale, dans une position initiale située entre les deux positions extrêmes d'angle de pivotement, étant disposé à une distance radiale d'une surface de butée (8) cylindrique, disposée à l'intérieur ou à l'extérieur de l'hélice, d'un élément de butée (6) en matière synthétique, et au moins un écarteur (12) étant disposé avec jeu respectivement entre des spires adjacentes du conduit de fluide (9) hélicoïdal.

2. Mécanisme de réglage selon la revendication 1, **caractérisé en ce que** l'axe d'hélice coïncide avec l'axe de pivotement (2).

3. Mécanisme de réglage selon la revendication 1 ou 2, **caractérisé en ce que** le conduit de fluide (9) se compose d'acier ou d'un alliage de titane.

4. Mécanisme de réglage selon la revendication 1, 2 ou 3, **caractérisé en ce que** le conduit de fluide (9) est configuré en tant que flexible de section ronde.

5. Mécanisme de réglage selon l'une des revendications 1 à 4, **caractérisé en ce que** l'élément de butée (6) est en matière synthétique haute performance, telle que par exemple en polyimide ou en polyétheréthercétone.

6. Mécanisme de réglage selon l'une des revendications 1 à 5, **caractérisé en ce que** les spires du conduit de fluide (9) en spirale sont axialement espacées les unes des autres.

7. Mécanisme de réglage selon l'une des revendications 1 à 6, **caractérisé en ce que** sont enroulés respectivement en spirale plusieurs conduits de fluide (9) parallèles, entre lesquels est disposé respectivement au moins un écarteur (12) axial.
